# FASCICULE DE BREVET EUROPEEN

(11) **EP 2 004 475 B1**
(45) Date de publication et mention de la délivrance du brevet: **23.05.2012**
(21) Numéro de dépôt: 07731269.2
(22) Date de dépôt: 10.04.2007
(51) Int. Cl.: B62D 25/08, B62D 25/16, B60R 21/34

(54) **BLOC AVANT D'UN VEHICULE AUTOMOBILE ET PIECE DE SUPPORT D'UNE AILE LATERALE AVANT D'UN TEL VEHICULE**
VORDERENDE EINES KRAFTFAHRZEUGS UND TEIL ZUR ABSTÜTZUNG EINES VORDEREN SEITENFLÜGELS SOLCH EINES FAHRZEUGS
FRONT END OF A MOTOR VEHICLE, AND PART FOR SUPPORTING A FRONT SIDE WING OF SUCH A VEHICLE

(30) Priorité: 11.04.2006 FR 0603202
(43) Date de publication de la demande: 24.12.2008
(73) Titulaire: Peugeot Citroën Automobiles S.A., 78140 Vélizy Villacoublay (FR); Inoplast, 07100 Annonay (FR)
(72) Inventeur: MARTIN, Laurent, F-07340 Peaugres (FR); LAIR, Renaud, F-92260 Fontenay Aux Roses (FR); GROENINCK, François, F-95170 Deuil La Barre (FR)
(74) Mandataire: Myon, Gérard Jean-Pierre
(86) Numéro de dépôt international: PCT/FR2007/000598
(87) Numéro de publication internationale: WO 2007/116145

(56) Documents cités:
- EP-A- 1 574 423
- EP-A2- 1 564 114
- DE-A1- 10 063 582
- FR-A1- 2 866 622

## Description

La présente invention concerne un bloc avant d'un véhicule automobile.

L'invention s'intéresse plus particulièrement au bloc avant définissant, à l'arrière de leur capot, une zone de captage d'air extérieur pour alimenter l'habitacle interne du véhicule. En pratique, cette zone est séparée de manière étanche du compartiment sous capot contenant le moteur de propulsion du véhicule, afin que l'air contenu dans ce compartiment ne soit pas admis dans l'habitacle, pour des raisons de sécurité et de confort.

Généralement, dans la partie transversale courante du bloc avant, cette séparation étanche est fournie par un auvent fixé au châssis du véhicule et agencé sous le capot avec interposition d'un joint, couramment appelé « joint arrière de capot ». A chaque extrémité latérale de ce joint, l'étanchéité est plus délicate à réaliser : il est nécessaire de rapporter une multitude de petites cales en mousse pour boucher la discontinuité entre le joint et l'aile correspondante, au niveau d'un bord extrême de cette aile permettant la fixation de cette dernière à une pièce de support, généralement à une doublure d'aile rapportée fixement sur le châssis du véhicule. La conception et l'assemblage de ces cales en mousse s'avèrent donc compliqués, étant remarqué que l'étanchéité obtenue a tendance à se dégrader dans le temps car les mousses utilisées perdent progressivement leur souplesse et/ou leur capacité de mémoire de forme.

EP-A-1 574 423 propose d'étancher chaque extrémité latérale de la zone de captage d'air extérieur par une pièce de support de l'aile correspondante. En pratique, la qualité de l'étanchéité fournie par cette pièce est médiocre, car ZP-A-1 574 423 n'enseigne aucun aménagement structurel précis lié à la recherche d'étanchéité.

Le but de la présente invention est de proposer un bloc avant du type de EP-A-1 574 423, dont l'étanchéité des extrémités latérales de la zone de captage d'air extérieur est améliorée.

A cet effet, l'invention a pour objet un bloc avant d'un véhicule automobile, comprenant un capot frontal à l'arrière duquel est définie une zone de captage d'air extérieur, au moins une aile latérale s'étendant le long d'un bord latéral du capot, et au moins une pièce allongée de support de l'aile, qui est adaptée pour être fixée sur un élément de châssis du véhicule de manière à s'étendre en longueur au niveau de la jonction entre l'aile et le capot, et qui inclut, dans sa partie arrière, une cloison de fixation de l'aile, adaptée pour séparer de manière étanche la zone de captage d'air extérieur et le reste du volume sous capot, caractérisé en ce qu'il comporte en outre un auvent transversal, agencé sous le capot et délimitant en partie la zone de captage d'air extérieur, la cloison -comportant une paroi transversale qui s'étend dans le prolongement d'une paroi transversale latérale de l'auvent.

Grâce à la cloison arrière de la pièce de support du bloc avant selon l'invention, la zone de captage d'air extérieur est, à son extrémité latérale associée à l'aile supportée par cette pièce, efficacement isolée du reste du volume sous capot, ce qui évite d'utiliser des garnitures d'étanchéité rapportées telles que des cales en mousse. En particulier, de chaque côté latéral de l'auvent, la paroi transversale de cette cloison assure efficacement la continuité de l'étanchéité entre la zone de captage d'air extérieur et le reste du volume sous capot. Le recours à cette cloison limite ainsi le temps d'assemblage du bloc avant, ainsi que le nombre de matériaux présents dans ce bloc, ce qui en facilite le recyclage en fin de vie. De plus, la tenue dans le temps de cette cloison est stable. On notera que cette cloison combine avantageusement la fonction d'étanchéité latérale de la zone de captage d'air extérieur et la fonction de support mécanique de l'aile latérale correspondante, ce qui s'avère particulièrement avantageux, à la fois d'un point de vue économique et d'un point de vue technique, en particulier au niveau de la zone jonction assez étroite entre l'aile et le capot.

Suivant une caractéristique avantageuse du bloc avant selon l'invention, il comporte en outre un moteur de propulsion du véhicule, recouvert par le capot, la cloison étant adaptée pour séparer de manière étanche la zone de captage d'air extérieur et le volume sous capot contenant le moteur.

Suivant des caractéristiques structurelles avantageuses de la cloison conforme à l'invention, prises isolément ou selon toutes les combinaisons techniquement possibles :
- la cloison comporte une paroi longitudinale sur laquelle l'aile est fixée ;
- l'aile est munie, dans sa partie d'extrémité supérieure, d'un bord plié vers le bas, adapté pour coiffer l'extrémité supérieure de la paroi longitudinale de la cloison ;
- le bloc avant comporte en outre un joint d'étanchéité transversal, agencé sous le capot et s'étendant le long des parois transversales de l'auvent et de la cloison.

Avantageusement, la cloison conforme à l'invention intègre d'autres fonctions que la fonction d'étanchéité latérale de la zone de captage d'air extérieur et que la fonction de support mécanique de l'aile latérale correspondante, en particulier une fonction d'absorption de choc. A cet effet, la cloison est adaptée pour se rompre selon au moins une ligne de rupture prédéterminée lors d'un choc contre le bloc avant, cette ou ces lignes de rupture prédéterminées étant définies par des amincissements localisés de la cloison et/ou par des nervures de renfort.

De même, avantageusement, la pièce de support incluant la cloison conforme à l'invention intègre des fonctions supplémentaires, notamment d'absorption de choc. A cet effet :
- la pièce de support inclut, en avant de la cloison, au moins un absorbeur de choc contre le capot, sous forme d'une protubérance en saillie vers le haut, présentant un profil en L inversé, les zones de liaison entre les deux parois du L, ainsi qu'entre l'extrémité libre du L et le reste de la pièce de support définissant des lignes de rupture prédéterminées adaptées pour se rompre lors d'un choc contre le capot ;
- la pièce de support inclut, dans sa partie d'extrémité avant, au moins une paroi ruptible de fixation d'au moins un élément d'équipement avant du bloc avant, tel qu'en ensemble d'éclairage, un cadre de façade ou une butée de capot.

En pratique, pour concilier les diverses fonctions de la pièce de support, notamment de la cloison conforme à l'invention, cette pièce est constituée d'un matériau composite injecté, de préférence de type AMC.

L'invention sera mieux comprise à la lecture de la description qui va suivre, donnée uniquement à titre d'exemple et faite en se référant aux dessins sur lesquels :
- la figure 1 est une vue schématique de dessus d'un bloc avant selon l'invention ;
- la figure 2 est une section de principe selon la ligne II-II de la figure 1 ;
- la figure 3 est une vue en perspective d'une pièce de support, considérée seule, appartenant au bloc avant de la figure 2 ;
- la figure 4 est une vue en perspective de la pièce de la figure 3, sous un angle de vue différent et sur laquelle sont assemblés d'autres composants du bloc avant de la figure 1 ;
- la figure 5 est une vue à plus grande échelle du détail encadré V à la figure 4 ; et
- la figure 6 est une section de principe selon le plan VI de la figure 3.

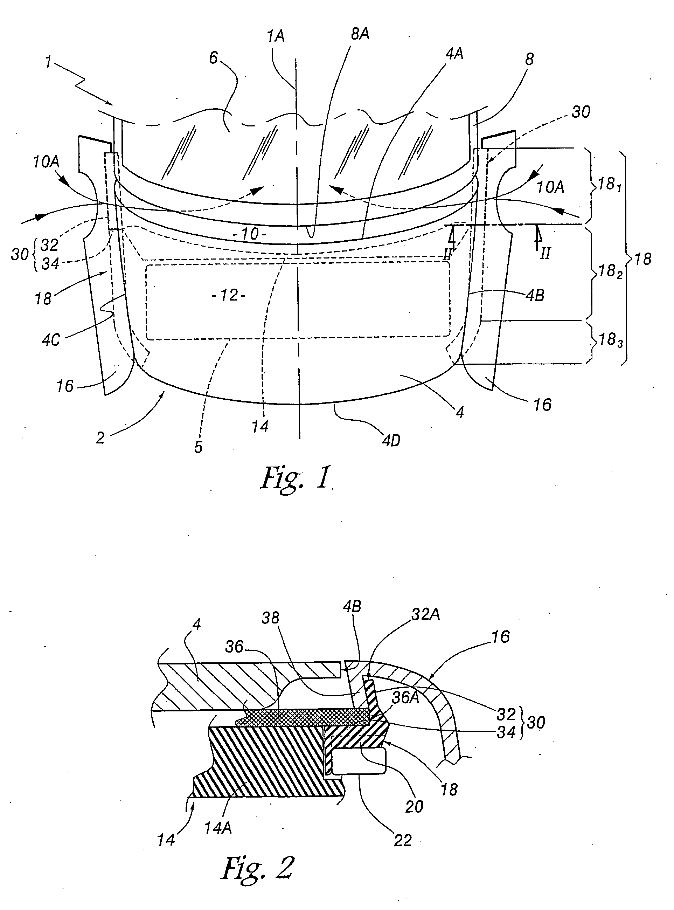

Sur la figure 1 est représenté l'avant d'un véhicule automobile 1, muni d'un bloc avant 2. Par commodité, dans la suite, les termes « avant », « arrière », « gauche » et « droit », ainsi que des termes analogues sont orientés par rapport au sens normal de progression du véhicule 1, à savoir vers le bas sur la figure 1. De même, les termes « inférieur » et « bas » désignent une direction dirigée vers le sol sur lequel repose le véhicule, les termes « supérieur » et « haut » désignant une direction de sens opposé.

Le bloc avant 2 comporte un capot 4 qui, en position fermée comme à la figure 1, recouvre un moteur 5 de propulsion du véhicule 1 et à l'arrière duquel s'étend vers l'arrière un pare-brise avant 6, entouré par un cadre 8. Comme indiqué schématiquement à la figure 1, le bord arrière 4A du capot 4 et le bord avant 8A du cadre 8 ne sont pas jointifs, mais sont au contraire distants l'un de l'autre suivant la direction de progression du véhicule, de manière à ce que de l'air extérieur puisse être admis sous le niveau du capot, en passant entre ces bords 4A et 8A. Cet air est collecté dans une zone 10 de captage d'air extérieur, d'où cet air alimente l'habitacle intérieur du véhicule, via un réseau d'acheminement et de traitement non représenté, comme indiqué par les flèches 10A sur la figure 1.

Dans la partie courante du bloc avant 2, la zone 10 est séparée du volume sous capot 12 contenant le moteur 5, appelé couramment compartiment moteur, par un auvent transversal 14 qui s'étend sensiblement dans le plan de la figure 2. Cet auvent est agencé sous la partie arrière du capot 4, en avant de son bord arrière 4A, en étant immobilisé par rapport au bloc avant 2, notamment par fixation sur un élément de châssis du véhicule 1.

Le bloc avant 2 comporte, sur chacun de ses côtés latéraux gauche et droit, une aile de carrosserie 16 s'étendant en longueur le long du bord latéral correspondant 4B, 4C du capot 4, depuis le bord avant 4D de ce capot jusqu'au cadre de pare-brise 8. Chaque aile 16 est portée par une pièce 18 allongée suivant la direction de progression du véhicule 1, s'étendant en longueur depuis sensiblement le bord avant 4D du capot 4 jusqu'au cadre de pare-brise 8.

Comme les ailes gauche et droite 16 et leur pièce de support associée 18 sont symétriques par rapport au plan vertical médian 1A du véhicule 1, seul l'ensemble gauche aile/pièce de support, représenté plus en détail aux figures 2 à 6, sera considéré ci-après, étant entendu que l'ensemble droit aile/pièce de support présente des aménagements analogues, symétriques par rapport au plan 1A.

La pièce 18, réalisée d'un seul tenant, est constituée de trois parties successives suivant sa longueur, à savoir une partie arrière 18₁ et une partie intermédiaire 18₂ qui s'étendent dans le prolongement rectiligne l'une de l'autre, ainsi qu'une partie avant 18₃ qui, vue de dessus, converge à l'avant vers le plan médian 1A.

La pièce 18 comporte un corps principal 20 globalement plan et qui court depuis la partie arrière 18₁ jusqu'à la partie avant 18₃. Ce corps 20 est fixé à demeure sur le châssis du véhicule 1, notamment le long d'une poutre supérieure 22 de ce châssis, représentée uniquement à la figure 2. Pour permettre cette fixation, le corps 20 délimite plusieurs trous traversants 24 répartis suivant la direction longitudinale de la pièce 18 et adaptés pour recevoir des moyens de fixation non représentés, tels que des vis en Z ou en Y. En outre, sur son côté dirigé vers le plan médian 1A, le corps 20 est muni d'un bord 26 dirigé vers le bas, permettant à la fois de rigidifier le corps et de caler ce dernier le long de la poutre 22.

Dans la partie arrière 18₁ de la pièce de support 18, le corps 20 est muni d'une cloison 30 indiquée en pointillés gras à la figure 1. Cette cloison s'étend en saillie vers le haut depuis la face supérieure du corps. Elle est constituée d'une première paroi pleine 32 s'étendant suivant la direction longitudinale de la partie arrière 18₁, le long du côté de cette partie opposé au plan médian 1A, et d'une seconde paroi pleine 34 s'étendant de manière sensiblement perpendiculaire à la direction longitudinale précitée. La paroi transversale 34 est située à l'extrémité avant de la partie arrière 18₁, tandis que la paroi longitudinale 32 s'étend sur toute la longueur de cette partie arrière, c'est-à-dire depuis son extrémité arrière jusqu'à la paroi transversale 34, en étant venue de matière avec cette dernière, comme visible dans le plan de la figure 2.

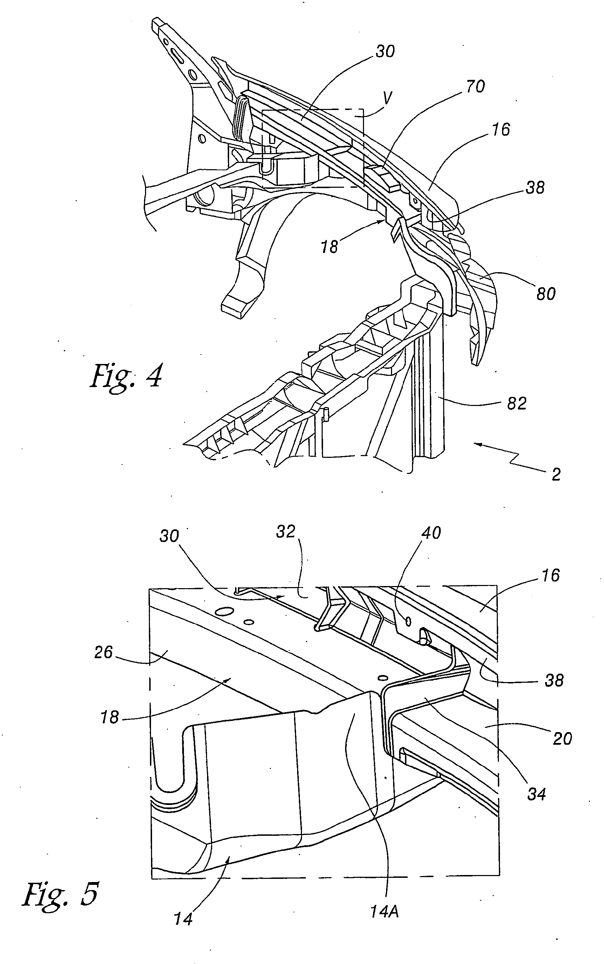

Vis-à-vis des autres composants du bloc avant 2, représentés uniquement en traits fins sur la figure 4 pour des raisons de visibilité, la cloison 30 est disposée à l'extrémité gauche de la zone de captage d'air extérieur 10, comme représenté à la figure 1. Grâce à cette cloison pleine, la partie arrière 18₁ de la pièce de support 18 délimite de manière étanche l'extrémité latérale de cette zone 10 : les parois 32 et 34 empêchent que de l'air provenant du compartiment moteur 12 et s'écoulant à l'intérieur et le long de l'aile 16 ne puisse être admis latéralement dans la zone 10.

En pratique, la paroi transversale 34 s'étend dans le prolongement rectiligne d'une paroi transversale latérale 14A de l'auvent 14, comme visible dans le plan de la figure 2 et comme représenté aux figures 4 et 5 sur lesquelles le capot 4 est omis pour des raisons de visibilité. La continuité transversale de l'étanchéité entre la zone de captage d'air extérieur 10 et le compartiment moteur 12 est ainsi assurée efficacement.

Un joint 36 est interposé entre le bord supérieur de l'auvent 14 et le capot 4, comme représenté uniquement à la figure 2. Avantageusement, ce joint 36 est dimensionné pour s'étendre transversalement le long de la paroi transversale 34, l'extrémité latérale 36A de ce joint étant amenée en contact étanche jusqu'à la paroi longitudinale 32. En pratique, lorsque le capot est en position ouverte, l'extrémité 36A du joint 36 peut être prévue légèrement distante de la paroi 32, de manière à créer ainsi un espace libre intermédiaire qui est comblé par la partie d'extrémité du joint lors de l'écrasement de ce dernier au moment où le capot est amené en position fermée. Pour faciliter l'assemblage du joint 36, ce dernier est de préférence chaussé sur les bords supérieurs de la paroi d'auvent 14A et de la paroi transversale 34.

La paroi longitudinale 32 est en outre prévue pour permettre la fixation mécanique de l'aile 16. A cet effet, cette aile comporte un bord d'extrémité supérieure 38 plié vers le bas, de manière à venir coiffer le bord supérieur 32A de la paroi longitudinale 32, comme représenté sur les figures 2, 4 et 5. La fixation est assurée par des moyens non représentés, tels que des vis en Z ou en Y, reçus dans des trous traversant 40 et 42 respectivement prévus dans les bords 38 et 32A.

A l'état assemblé du bloc avant 2, le bord 38 de l'aile 16 n'est pas visible depuis l'extérieur du véhicule 1, la zone de jonction entre ce bord et le reste de l'aile s'étendant en affleurement du bord 4B du capot 4, comme représenté à la figure 2. On comprend que la paroi 32 participe de manière significative au positionnement de l'aile 16 au sein du bloc avant 2, tout en étant masquée par cette aile à l'état assemblé.

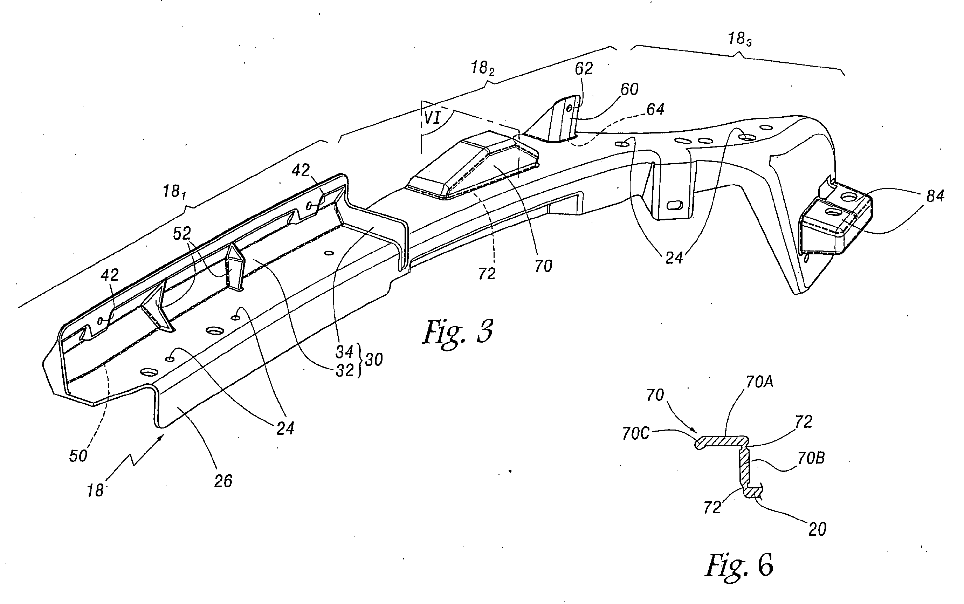

En plus de ses fonctions d'étanchéité de l'extrémité transversale de la zone de captage d'air extérieur 10 et de fixation mécanique de l'aile 16, la cloison 30 intègre avantageusement une fonction d'absorption de choc, en particulier lors d'un choc entre l'aile 16 et un piéton. A cet effet, la cloison 30 est adaptée pour, en cas de choc, se rompre selon des lignes de rupture prédéterminées 50 indiquées en pointillés gras uniquement à la figure 3. Pour ce faire, la cloison 30 présente des amincissements localisés de sa paroi 32, en pratique le long des lignes de rupture 50. Pour que la cloison 30 satisfasse également à un niveau préfixé de rigidité globale et de résistance aérodynamique, la paroi longitudinale 32 est localement renforcée par des nervures verticales 52 qui sont dimensionnées, notamment au niveau de leurs zones de jonction avec la paroi 32, pour permettre la rupture prédéterminée de la cloison lors d'un choc avec un piéton.

Dans ses parties intermédiaire 18₂ et avant 18₃, la pièce de support 18 intègre avantageusement des fonctions additionnelles.

La partie intermédiaire 18₂ est munie d'une patte 60 de fixation de l'aile 16. Cette patte 60 s'étend en saillie vers le haut depuis le corps principal 20, un trou traversant 62 étant prévu à l'extrémité supérieure de la patte pour recevoir un moyen de fixation non représenté, tel qu'une vis en Z, pour fixer l'aile, comme représenté à la figure 4. Autrement dit, la fixation de l'aile 16 est assurée conjointement par la cloison 30 et la patte 60. Cette patte 60 est avantageusement reliée au corps 20 par une ligne de rupture prédéterminée 64, analogue aux lignes 50 évoquées ci-dessus pour la cloison 30 et destinées à permettre l'enfoncement vers le bas de la patte, à travers le corps 20, lors d'un choc entre l'aile 16 et un piéton.

La partie intermédiaire 18₂ est en outre munie, au niveau de sa partie courante, d'un absorbeur 70 de choc contre le capot 4. Cet absorbeur 70 vise à limiter la gravité d'un choc entre un piéton, notamment la tête de ce dernier, et le capot 4, en permettant d'absorber au moins une partie de l'énergie de ce choc lors de l'enfoncement du capot par le piéton heurté. En pratique, cet absorbeur 70 se présente avantageusement sous la forme d'une protubérance saillante vers le haut depuis le corps principal 20 de la pièce 18, présentant, en coupe transversale comme à la figure 6, un profil en L inversé, ouvert du côté de l'aile 16. Cette protubérance est prévue pour se rompre le long de lignes de rupture prédéterminées 72 s'étendant, à la fois, le long de la zone de liaison entre la paroi horizontale 70A du L et la paroi verticale 70B du L, ainsi que le long de la zone de liaison entre l'extrémité inférieure de la paroi verticale 70B et le corps 20. Ces zones de liaison présentent à cet effet une épaisseur moindre que le corps 20 et que le reste de l'absorbeur 70, comme représenté à la figure 6.

De manière préférée, l'arête extérieure 70C de la protubérance 70, c'est-à-dire son arête dirigée vers l'aile 16 (partie gauche à la figure 6), est inclinée vers l'extérieur en direction du sol. L'arête 70C forme ainsi une rampe permettant, en cas de choc entre l'aile et la tête d'un piéton, de déverser l'aile vers l'extérieur ou de rabattre contre lui-même le bord d'extrémité 38 de l'aile de façon à ce que ce bord ne crée pas un pic d'effort au contact de la structure de châssis ou de la pièce de support 18.

La partie avant 18₃ de la pièce 18 est, quant à elle, adaptée pour permettre la fixation d'éléments d'équipement avant du bloc avant 2, tel qu'un ensemble d'éclairage 80 et un cadre de façade 82 destiné à supporter une calandre ou analogue. D'autres éléments d'équipements, non représentés, peuvent être portés par la partie avant 18₃, notamment une ou plusieurs butées de capot, c'est-à-dire un organe rapporté contre lequel le capot 4 vient en butée lorsqu'il est en position fermée.

A cet effet, la partie avant 18₃ comporte notamment des pattes 84 de fixation de ces éléments d'équipement, fonctionnellement analogues à la patte 60. De manière plus générale, les parois constituant cette partie 18₃ sont prévues pour permettre la fixation de ces éléments d'équipement, tout en présentant des lignes de rupture prédéterminées de sorte que la partie 18₃ absorbe au moins une partie de l'énergie de choc entre un piéton et soit ces éléments d'équipement avant, soit le capot 4. Autrement dit, la partie 18₃ est fusible de manière à préserver l'intégrité des éléments d'équipement dans le cas d'un choc à vitesse modérée, de type « choc urbain », pour limiter le coût d'éventuelles réparations.

On notera que le fait d'intégrer à la pièce de support 18 des lignes de rupture prédéterminées, telles que les lignes 50 et 72, destinées à se rompre en cas de choc entre le bloc avant 2 et un piéton évite d'utiliser, au sein de ce bloc, des composants intégrant des moyens d'absorption de choc. Autrement dit, les composants assemblés sur la pièce 18, telle que l'aile 16, le capot 4, l'ensemble d'éclairage 80, le cadre de façade 82 et/ou les butées de capot précitées, sont avantageusement des composants standard et donc peu onéreux, n'intégrant aucune fonction d'absorption de choc.

En pratique, pour permettre à la pièce de support 18 d'assurer ses diverses fonctions d'étanchéité, de fixation mécanique et d'absorption de choc, cette pièce est avantageusement réalisée en un matériau composite injecté, tel que les matériaux thermodurcissables AMC et BMC, les noms de ces matériaux reprenant les initiales de leur désignation en langue anglaise, à savoir « Adapted Molding Coumpound » et « Bulk Molding Compound ». Les matériaux AMC et BMC se présentent sous forme de vracs à base de résine polyester, de charges et de fibres de verre coupées ; ils se transforment par injection ou par injection-compression. Le matériau AMC est ici préféré au matériau BMC car, lors de sa mise en forme, les fibres de la pièce moulée sont plus longues et moins dégradées, ce qui confère à la pièce en matériau AMC des propriétés mécaniques supérieures à une pièce réalisée en matériau BMC.

Divers aménagements et variantes au bloc avant 2 décrit ci-dessus sont par ailleurs envisageables. A titre d'exemple, la forme et la disposition des zones de fixation de l'aile 16 le long de la pièce de support 18 peuvent être modifiées, en particulier en fonction de la géométrie du véhicule, notamment de sa poutre supérieure 22.

## Revendications

1. Bloc avant (2) d'un véhicule automobile (1), comprenant un capot frontal (4) à l'arrière duquel est définie une zone de captage d'air extérieur (10), au moins une aile latérale (16) s'étendant le long d'un bord latéral (4B, 4C) du capot, et au moins une pièce allongée (18) de support de l'aile (16), adaptée pour être fixée sur un élément de châssis (22) du véhicule de manière à s'étendre en longueur au niveau de la jonction entre l'aile et le capot, et qui inclut, dans sa partie arrière (18₁), une cloison (30) de fixation de l'aile, adaptée pour séparer de manière étanche la zone de captage d'air extérieur et le reste (12) du volume sous capot, **caractérisé en ce qu'**il comporte en outre un auvent transversal (14), agencé sous le capot (4) et délimitant en partie la zone de captage d'air extérieur (10), la cloison (30) comportant une paroi transversale (34) qui s'étend dans le prolongement d'une paroi transversale latérale (14A) de l'auvent.

2. Bloc avant suivant la revendication 1, **caractérisé en ce qu'**il comporte en outre un moteur (5) de propulsion du véhicule (1), recouvert par le capot (4), la cloison (30) étant adaptée pour séparer de manière étanche la zone de captage d'air extérieur (10) et le volume sous capot (12) contenant le moteur.

3. Bloc avant suivant l'une des revendications 1 ou 2, **caractérisé en ce que** la cloison (30) comporte une paroi longitudinale (32) sur laquelle l'aile (16) est fixée.

4. Bloc avant suivant la revendication 3, caractérisé en ce l'aile (16) est munie, dans sa partie d'extrémité supérieure, d'un bord (38) plié vers le bas, adapté pour coiffer l'extrémité supérieure (32A) de la paroi longitudinale (32) de la cloison (30).

5. Bloc avant suivant l'une quelconque des revendications précédentes, **caractérisé en ce qu'**il comporte en outre un joint d'étanchéité transversal (36), agencé sous le capot (4) et s'étendant le long des parois transversales (14A, 34) de l'auvent (14) et de la cloison (30).

6. Bloc avant suivant l'une quelconque des revendications précédentes, **caractérisé en ce que** la cloison (30) est adaptée pour se rompre selon au moins une ligne de rupture prédéterminée (50) lors d'un choc contre le bloc avant (2), cette ou ces lignes de rupture prédéterminées étant définies par des amincissements localisés de la cloison et/ou par des nervures de renfort (52).

7. Bloc avant suivant l'une quelconque des revendications précédentes, **caractérisé en ce que** la pièce de support (18) inclut, en avant de la cloison (30), au moins un absorbeur (70) de choc contre le capot (4), sous forme d'une protubérance en saillie vers le haut, présentant un profil en L inversé, les zones de liaison entre les deux parois (70A, 70B) du L, ainsi qu'entre l'extrémité libre du L et le reste (20) de la pièce de support (18) définissant des lignes de rupture prédéterminées (72) adaptées pour se rompre lors d'un choc contre le capot.

8. Bloc avant suivant l'une quelconque des revendications précédentes, **caractérisé en ce que** la pièce de support (18) inclut, dans sa partie d'extrémité avant (18₃), au moins une paroi ruptible (84) de fixation d'au moins un élément d'équipement avant du bloc avant (2), tel qu'un ensemble d'éclairage (80), un cadre de façade (82) ou une butée de capot.

9. Bloc avant suivant l'une quelconque des revendications précédentes, **caractérisé en ce que** la pièce de support (18), notamment sa cloison (30), est constituée d'un matériau composite injecté, de préférence de type AMC.

## Claims

1. Front end (2) of a motor vehicle (1) comprising a front bonnet (4) behind which an area (10) for capturing air from the exterior is defined, at least one lateral wing (16) which extends along a lateral edge (4B, 4C) of the bonnet, and at least one elongate part (18) to support the wing (16), which is designed to be secured to a chassis element (22) of the vehicle, such as to extend in length at the level of the junction between the wing and the bonnet, and which includes in its rear part (18₁) a partition (30) for securing of the wing, which partition is designed to separate in a sealed manner the area for capturing air from the exterior and the remainder (12) of the volume under the bonnet, **characterised in that** it additionally comprises a transverse louvre (14) which is placed under the bonnet (4) and partly delimits the area (10) for capturing air from the exterior, the partition (30) comprising a transverse wall (34) which extends in the extension of a lateral transverse wall (14A) of the louvre.

2. Front end according to claim 1, **characterised in that** it additionally comprises an engine (5) for propulsion of the vehicle (1), covered by the bonnet (4), the partition (30) being designed to separate in a sealed manner the area (10) for capturing air from the exterior and the volume under the bonnet (12) which contains the engine.

3. Front end according to one of claims 1 or 2, **characterised in that** the partition (30) comprises a longitudinal wall (32) on which the wing (16) is secured.

4. Front end according to claim 3, **characterised in that** the wing (16) is provided on its upper end part with an edge (38) which is bent downwards, and is designed to cover the upper end (32A) of the longitudinal wall (32) of the partition (30).

5. Front end according to any one of the preceding claims, **characterised in that** it additionally comprises a transverse seal (36) which is placed under the bonnet (4) and extends along the transverse walls (14A, 34) of the louvre (14) and the partition (30).

6. Front end according to any one of the preceding claims, **characterised in that** the partition (30) is designed to break according to at least one predetermined rupture line (50) when there is an impact against the front end (2), this or these predetermined rupture line(s) being defined by localised thinning of the partition and/or by reinforcement ribs (52).

7. Front end according to any one of the preceding claims, **characterised in that** the support part (18) includes, to the front of the partition (30), at least one absorber (70) for impact against the bonnet (4), in the form of a protuberance which projects upwards and has a profile in the form of an inverted "L", the areas of connection between the two walls (70A, 70B) of the "L" as well as between the free end of the "L" and the remainder (20) of the support part (18) defining predetermined rupture lines (72) which are designed to break during impact against the bonnet.

8. Front end according to any one of the preceding claims, **characterised in that** the support part (18) includes, in its front end part (18₃), at least one breakable wall (84) for securing of at least one front equipment element of the front end (2), such as a lighting assembly (80), a facade frame (82), or a bonnet stop.

9. Front end according to any one of the preceding claims, **characterised in that** the support part (18), and in particular its partition (30), is constituted by an injected composite material, preferably of the AMC type.

## Patentansprüche

1. Vorderende (2) eines Kraftfahrzeugs (1), das eine Vorderhaube (4) aufweist, an deren Rückseite eine Außenluftfangzone (10) definiert ist, mindestens einen Seitenflügel (16), der sich entlang eines seitlichen Rands (4B, 4C) der Haube erstreckt, und mindestens einen länglichen Teil (18) zum Stützen des Flügels (16), der auf einem Chassiselement (22) des Fahrzeugs derart befestigt werden kann, dass er sich in der Länge auf dem Niveau der Verbindung zwischen dem Flügel und der Haube erstreckt, und der in seinem hinteren Teil (18₁) eine Wand (30) zum Befestigen des Flügels aufweist, die angepasst ist, um die Außenluftfangzone und den Rest (12) des Volumens unter der Haube dicht zu trennen, **dadurch gekennzeichnet, dass** es ferner ein Quervordach (14) aufweist, das unter der Haube (4) eingerichtet ist und zum Teil die Außenluftfangzone (10) abgrenzt, wobei die Wand (30) eine Querwand (34) aufweist, die sich in der Verlängerung einer seitlichen Querwand (14A) des Vordachs erstreckt.

2. Vorderende nach Anspruch 1, **dadurch gekennzeichnet, dass** es ferner einen Antriebsmotor (5) des Fahrzeugs (1) aufweist, der von der Haube (4) abgedeckt ist, wobei die Wand (30) die Außenluftfangzone (10) von dem Volumen unter der Haube (12), das den Motor enthält, dicht trennen kann.

3. Vorderende nach einem der Ansprüche 1 oder 2, **dadurch gekennzeichnet, dass** die Wand (30) eine Längswand (32) aufweist, auf welcher der Flügel (16) befestigt ist.

4. Vorderende nach Anspruch 3, **dadurch gekennzeichnet dadurch gekennzeichnet, dass** der Flügel (16) in seinem oberen Endteil mit einem Rand (38) versehen ist, der nach unten gefaltet ist, der auf dem oberen Ende (32A) der Längswand (32) der Wand (30) sitzen kann.

5. Vorderende nach einem der vorhergehenden Ansprüche, **dadurch gekennzeichnet, dass** es ferner eine Querdichtung (36) aufweist, die unter der Haube (4) eingerichtet ist und sich entlang der Querwände (14A, 34) des Vordachs (14) und der Wand (30) erstreckt.

6. Vorderende nach einem der vorhergehenden Ansprüche, **dadurch gekennzeichnet, dass** die Wand (30) entlang mindestens einer vorbestimmten Bruchlinie (50) bei einem Aufprall gegen das Vorderende (2) brechen kann, wobei diese vorbestimmte Bruchlinie oder vorbestimmten Bruchlinien durch lokale Verdünnungen der Wand und/oder durch Verstärkungsrippen (52) definiert sind.

7. Vorderende nach einem der vorhergehenden Ansprüche, **dadurch gekennzeichnet, dass** der Tragteil (18) vor der Wand (30) mindestens einen Stoßabsorbierer (70) gegen die Haube (4) in Form eines nach oben vorstehenden Vorsprungs aufweist, der ein Profil eines umgekehrten L aufweist, wobei die Verbindungszonen zwischen den zwei Wänden (70A, 70B) des L sowie zwischen dem freien Ende des L und dem Rest (20) des Tragteils (18) vorbestimmte Bruchlinien (72) definieren, die bei einem Aufprall gegen die Haube brechen können.

8. Vorderende nach einem der vorhergehenden Ansprüche, **dadurch gekennzeichnet, dass** der Tragteil (18) in seinem vorderen Endteil (18₃) mindestens eine brechbare Wand (84) zum Befestigen mindestens eines vorderen Ausstattungselements des Vorderendes (2), wie zum Beispiel eine Beleuchtungseinheit (80), ein Fassadenrahmen (82) oder ein Haubenanschlag, umfasst.

9. Vorderende nach einem der vorhergehenden Ansprüche, **dadurch gekennzeichnet, dass** der Tragteil (18), insbesondere seine Wand (30), aus einem injizierten Verbundwerkstoff, vorzugsweise des Typs AMC besteht.
